Europäisches Patentamt

European Patent Office

Office européen des brevets

(11) Veröffentlichungsnummer: **0 026 869**
**B1**

(12) **EUROPÄISCHE PATENTSCHRIFT**

(45) Veröffentlichungstag der Patentschrift:
04.06.86

(21) Anmeldenummer: **80105689.6**

(22) Anmeldetag: **22.09.80**

(51) Int. Cl.⁴: **F 16 N 29/04**, G 07 C 3/02

(54) **Wartungs-Überwachungseinrichtung für eine Anlage.**

(30) Priorität: **03.10.79 CH 8910/79**

(43) Veröffentlichungstag der Anmeldung:
**15.04.81 Patentblatt 81/15**

(45) Bekanntmachung des Hinweises auf die Patenterteilung:
**04.06.86 Patentblatt 86/23**

(84) Benannte Vertragsstaaten:
**AT BE CH DE FR GB IT LI LU NL SE**

(56) Entgegenhaltungen:
**US - A - 3 290 669**
**US - A - 3 546 693**
**US - A - 3 558 924**
**US - A - 3 603 880**
**US - A - 3 938 128**

**ELECTRONIC ENGINEERING, vol. 48, nr. 583, September 1976 London GB W. CHUNG: "Multiphase one shot provides pulses", Seite 21**
**IBM TECHNICAL DISCLOSURE BULLETIN, vol. 20, Nr. 12, Mai 1978 New York US H. HIGUCHI: "Electronic sequencer with programmable time delays" Seiten 5323-5324**
**THE ELECTRONIC ENGINEER, vol. 28, Nr. 8, August 1969 Raduor US M. STRANGE: "Op amps give mutually exclusive digital sequencing" Seite 80**

(73) Patentinhaber: **Mobil Oil (Switzerland), Picassoplatz 4, CH-4010 Basel (CH)**

(72) Erfinder: **Knibiehler, Ernst, St. Johanns-Platz 18, CH-4056 Basel (CH)**
Erfinder: **Hirmann, Georg, Griesernweg 14, CH-8037 Zürich (CH)**

(74) Vertreter: **Troesch, Hans Alfred, Dr. Ing. et al, Walchestrasse 19, CH-8035 Zürich (CH)**

(56) Entgegenhaltungen: (Fortsetzung)
**Handbuch für elektrisches Messen mechanischer Grössen, C. Rohrbach, VDI-Verlag, Düsseldorf, Seiten 431-437**
**"ELEKTROTECHNIK", 1976, Seiten 20-22**

ACTORUM AG

**Beschreibung**

Die vorliegende Erfindung betrifft eine Wartungs-Überwachungseinrichtung für eine Anlage, an welcher nach Ablauf von Wartungszeitabschnitten Wartungsarbeiten durchzuführen sind, mit einem während wartungsrelevanter Anlagebetriebszeit aktivierten Signalgeber, dem eine Integrationsanordnung nachgeschaltet ist sowie mit einer der Integrationsanordnung nachgeschalteten Anzeigeanordnung, die anzeigt, wenn die an der Integrationsanordnung aufgelaufene Betriebszeit einem vorgegebenen Wartungszeitabschnitt entspricht.

Es ist z.B. in der Industrie üblich, Maschinen nach vorgegebenen Schmierplänen zu schmieren. Die Überwachung solcher Schmierpläne erfolgt mittels Grafiken, welche hohe Zuverlässigkeit der Überwachungsstelle bedingen.

Es ist ferner bekannt, derartige Vorgänge mittels programmierter Karten und Computern zu überwachen. Diese Überwachung ist aber, insbesondere für Kleinbetriebe, u.a. zu kostspielig. Es besteht daher in der Industrie die Nachfrage nach einer narrensicheren Überwachungseinrichtung, welche eine menschliche Überwachung umgeht und sich mit entsprechenden Signalen direkt an die zuständigen Ausführungsorgane wendet.

Zum Stande der Technik gehört ein elektronischer Zähler mit programmierbarer Zeitverzögerung. Dieser arbeitet auf dem Analogprinzip. Der Zähler ist wenig genau und im Aufbau kompliziert: Ein Kondensator wird aufgeladen. Seine Spannung steigt mit der Ladezeit. Nach dessen Aufladen bleibt die Spannung konstant, bis er, nach vorgegebener Zeit, wiederum unter Spannungsabnahme bezüglich Zeit entladen wird. Die die Zeitabläufe bestimmenden Komparatoren werden über ohmsche Widerstände geschaltet, derart, dass sie bei Erreichen einer vorgesehenen steigenden Spannung einschalten und bei abfallender Spannung bei einem anderen Schwellwert wieder ausschalten. Die Zeitverzögerungen (EIN/AUS) können nur durch Auswechseln des Kondensators und der Widerstände verändert werden: Für die Praxis als Überwachungsvorrichtung im Maschinenbau ist dieses Gerät völlig untauglich, u.a. deshalb, weil es nicht für längere Zeiten (Laufzeiten von Maschinen in Tagen) verwendbar ist. (Disclosure Bulletin, Vol. 20, No. 12, 1978, P. 5323/24, The Electronic Engineer, August 69, P. 80).

Bei einer ähnlichen Ausführung (US-PS 3 558 924) arbeitet ein Hauptzeitgeberkreis auf dem gleichen Prinzip, aber nicht mit einem Kondensator zur Erzeugung der Spannungsrampen, sondern mit einem Rampen-Generator.

Es ist weiter bekannt (US-PS 3 290 669), die Zeitintervallmessung mittels Elektrolyse aufgrund einer durch einen vorbestimmten Strom abgeschiedenen Materialmenge vorzunehmen: Das Verfahren ist nicht repetierbar, denn die Kapsel muss nach jedem Zeitintervall ersetzt werden. Dies ist kompliziert und für die Lösung des vorliegenden Problems nicht geeignet.

Aus der US-PS 3 938 128 ist ebenfalls eine Anordnung bekannt geworden, die es erlaubt, an einer zeitweise betriebenen Anlage deren Betriebszeiten aufzuintegrieren, mit Hilfe eines Coulometers. Während den Betriebszeiten der Anlage fliesst durch das Coulometer ein vorgegebener Strom und es wird hier als Anzeigekriterium für den Ablauf einer zu überwachenden Zeitspanne die Impedanz des Coulometers erfasst. Auf Coulometer-Einsatz beruhende Systeme sind weiter aus der US-PS 3 290 669, der US-PS 3 546 693 und der US-PS 3 603 880 bis in jüngere Zeit vorgeschlagen, bekannt.

Grundsätzlich weisen nun auf Coulometer- bzw. elektrochemischen Prozessen arbeitende Wartungs-Überwachungseinrichtungen die Nachteile auf, dass sie nicht geeignet sind, an einer zu überwachenden Anlage eingesetzt, im Laufe der Zeit sequentiell auftretende Wartungszeitpunkte anzuzeigen, wie für Wartungen an verschiedenen Aggregaten der Anlage, nach unterschiedlichen Betriebszeiten erforderlich. Im weiteren ist ein einfaches Rücksetzen einer derartigen Überwachungseinrichtung nicht möglich, denn es müssen entweder durch Vorsehen eines neuen Coulometers bzw. einer neuen elektrochemischen Zelle oder durch Rückführung derselben in den den Messzeitraumanfang definierenden Zustand, neue Anfangsbedingungen gesetzt werden. Im weiteren ist bei derartigen Anordnungen eine flexible Anpassung ein und derselben Einrichtung an die Wartungsanforderungen verschiedener zu überwachender Anlagen nicht gegeben, bedingt durch eine nur unter Berücksichtigung komplexer Vorgänge veränderbaren Dynamik an derartigen Coulometern.

Alle diese bekannten Vorrichtungen arbeiten analog.

Auch ein Wartungs-Computer, welcher für die verschiedenen Wartungspositionen einer Maschine programmiert werden kann und der Tag und Nacht arbeitet, unabhängig davon, ob die zu überwachende Maschine läuft oder stillsteht, ist nicht im Stande, den Bedürfnissen der Praxis Rechnung zu tragen. Die Rückstellung bei einem solchen Gerät erfolgt mit nur einem Schlüssel und durch Drücken des richtigen Knopfes. Dies birgt die Gefahr in sich, den falschen Knopf zu drücken und noch benötigte Speicherwerte zu löschen. Das Gerät müsste vollprogrammiert aus der Fabrik angeliefert werden; daher wäre keine Selbsteinstellung im Betrieb möglich!

Im weiteren ist es grundsätzlich, wie aus dem Handbuch für elektrisches Messen mechanischer Grössen von C.H. Rohrbach, VDI-Verlag, Düsseldorf, Seiten 431 bis 437 bekannt, dass grundsätzlich für die Zeitmessung nebst der Messung des Transportes elektrischer Ladung, wie bei Coulometern, auch der Einsatz digitaler Zählschaltungen bekannt ist. Es ist auch aus der generellen Digitaltechnik, wie aus «Elektrotechnik», 1976, Seiten 20 bis 22 beispielsweise zu entnehmen, bekannt, an Zählschaltungen digitaler Art verstellbare Verbindungsmittel vorzusehen, um daran das Erreichen verschiedener, vorgebbarer Zählstände zu überwachen. Es ist somit eine grosse Anzahl von Wartungs-Überwachungseinrichtungen bekannt, die grundsätzlich auf analoger Basis arbeiten, sei dies durch Einsatz Rampengenerator entsprechender Organe mit Überwachung des Erreichens bestimmter Rampenwerte, sei dies durch Einsatz von Coulometern. Auf der anderen Seite ist aus der allgemeinen Digitaltechnik das Vorgehen zur Erfassung von Zeitabschnitten bekannt, eingesetzt für Komplex-Wartungs-Computer, Steuerungen etc.

Die vorliegende Erfindung geht nun von einer bekannten Wartungs-Überwachungseinrichtung obgenannter Art aus und setzt sich zum Ziel, die Vorteile – im Aufbau einfach zu sein, wenig Normteile zu erfordern, einfach in der Bedienung, betriebssicher und billig in der Anschaffung zu sein, und es dem Gebraucher zu ermöglichen, flexibel eine Anpassung an die an seiner zu überwachenden Anlage zu erwachsenden Wartungszeitabschnitte vorzunehmen – zu erwirken.

Hierzu zeichnet sie sich nach dem Wortlaut des Anspruchs 1 aus.

Zur Erfüllung der gestellten Aufgabe wird auf technische Vorkehrungen gegriffen, die aus wesentlich komplexeren Systemen seit langem bekannt waren, jedoch den Trend, derartige Einrichtungen vornehmlich auf Coulometerbasis aufzubauen, in der erwähnten vorteilhaften Weise, nicht zu durchbrechen vermochten, obwohl hierzu ein namhaftes Bedürfnis bestand.

Die Erfindung wird anschliessend beispielsweise anhand von Zeichnungen erläutert.

Es zeigen:

Fig. 1 ein kombiniertes Signalfluss/Funktionsblock-Diagramm eines Signalgebers,

Fig. 2 eine Realisationsform eines Signalgebers,

Fig. 3 eine Rücksetzschaltstrecke an der Anordnung gemäss Fig. 2,

Fig. 4 einen textlichen Schmierplan bei der Verwendung der Anordnungen gemäss den Fig. 1 und 2 zur Schmierungskontrolle an einer Werkzeugmaschine,

Fig. 5 einen figürlichen Schmierplan zur Anwendung analog Fig. 4,

Fig. 6 eine perspektivische Darstellung einer in einem Kästchen eingebauten Warnvorrichtung.

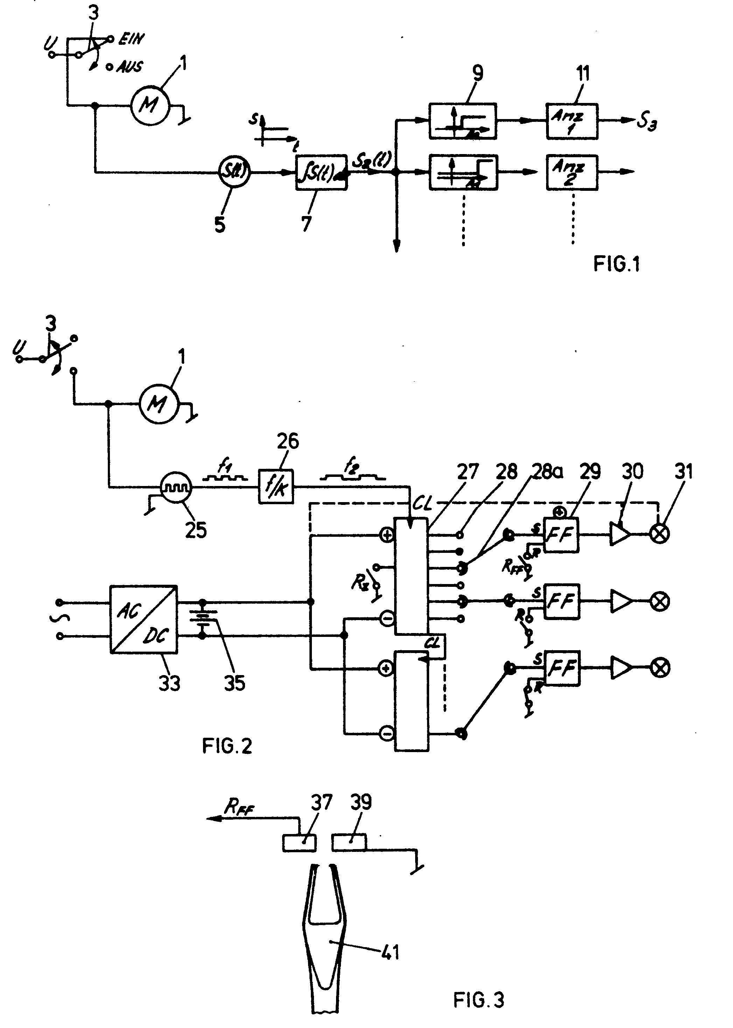

Gemäss Fig. 1 wird eine mit dem Signalgeber zu überwachende Anordnung, beispielsweise eine Maschine 1 mit einem Betriebsschalter 3 ein- und ausgeschaltet. Generell bestimmt die Lage des Schalters 3, an der zu überwachenden Maschine 1 angeordnet, die zu überwachenden Zeiten. Wenn er der Ein/Aus-Schalter der Maschine 1 ist, wird somit deren Betriebszeit überwacht. In Funktion des Schaltzustandes des Schalters 3 wird ein Signalgenerator 5 gestartet resp. ausgeschaltet. Er gibt in seinem eingeschalteten Zustand – d.h. bei im Betrieb befindlicher Maschine 1 – ein zeitabhängiges Signal $S(t)$ ab, wie beispielsweise generell dargestellt, einen konstanten Signalpegel. Dieses Ausgangssignal wird einer Integrationseinheit 7 zugeführt und dort aufintegriert, so dass am Ausgang der Integrationseinheit 7 ein Signal $S_2(t)$ erscheint. Dieses entspricht der Gesamtzeitspanne, während welcher der Generator 5 aktiviert worden ist, was mit anderen Worten, der Zeitspanne entspricht, während der die Maschine 1 in Funktion und daher zu überwachen war. Der Ausgang der Integrationseinheit 7 ist auf die Eingänge einer oder mehrerer schwellwertsensitiver oder zeiteinheitsensitiver Einheiten 9 geführt. Dabei gibt eine erste Einheit beispielsweise ein Signal ab, wenn das Signal $S_2(t)$ einen Schwellwert oder einen kritischen Gesamtzeitwert $A_0$ überschreitet, eine zweite, wenn besagter Signalwert einen Schwellwert $A_1$ überschreitet etc. Die Ausgänge der schwellwertsensitiven Einheiten sind auf je eine Anzeige 11 geführt.

Diese Anzeigen 11 können akustisch oder visuell sein, oder aber, wie mit den Ausgängen $S_3$ dargestellt, für eine automatische Auslösung von Steuervorgängen verwendet werden.

Gemäss Fig. 2 ist der Signalgenerator 5 von Fig. 1 als Impulsgenerator 25 ausgebildet. Er gibt, wenn durch Schliessen des Schalters 3 aktiviert, an seinem Ausgang eine Impulsfolge mit der Frequenz $f_1$ ab. Diese hängt von der Taktfrequenz des Generators 25, den zu überwachenden Zeitabschnitten und der Auslegung der nachfolgend beschriebenen Integrationseinheit ab. Dem Generator 25 ist ein Frequenzteiler 26 nachgeschaltet, an dessen Ausgang ein Impulszug mit der Frequenz $f_2$ erscheint. Das Integrationselement 7 gemäss Fig. 1 ist bei in Fig. 2 dargestelltem digitalem Aufbau durch eine oder mehrere Zählerstufen 27 realisiert, welche, je nach Bedürfnis, hintereinander geschaltet sind. Das Taktsignal mit der Frequenz $f_2$ wird dem Takteingang CL zugeführt, so dass in bekannter Art und Weise an den einzelnen Zählstufen der Zähler 27 sukzessive binäre Signale erscheinen. Die einzelnen Stufen der Zähler 27 sind vorzugsweise auf Anschlüsse 28 geführt, die mittels Überbrückungsstücken 28a wahlweise auf Setzeingänge s von Flip-Flop 29 geschaltet werden können. Bei dieser Ausführung sind die Schwellwerteinheiten oder Einheiten für die kritischen Gesamtzeitwerte 9 gemäss Fig. 1 durch die einzelnen Zählerstufen der Zähler 27 und damit verbundenen Flip-Flop 29 realisiert, indem nach einer vorgegebenen, dem jeweiligen Schwellwert $A_0$, $A_1$, $A_2$... entsprechenden Anzahl Impulse des mit der Frequenz $f_2$ auftretenden Impulszuges ein entsprechender Zählerausgang 28 aktiviert und damit auch der ihm zugeschaltete Flip-Flop 29 gesetzt wird. Über einen Treiber 30 steuern die Flip-Flop 29 die Anzeigen, beispielsweise LED-Dioden 31, entsprechend den Anzeigen 11 von Fig. 1. Die Flip-Flop 29 sind mit einzeln betätigbaren Rücksetzschaltern $R_{FF}$ oder R rücksetzbar.

Dies ermöglicht nach Durchführung einer nach Ablauf einer zu überwachenden Zeitspanne ausgeführten Handlung die entsprechende Leuchtdiode 31 zu löschen, praktisch als Quittung, dass die erforderliche Handlung ausgeführt worden ist. Um zu verhindern, dass bei Stromausfall das Integrationselement 7 entsprechend den Zählern 27 und allenfalls auch die Flip-Flop 29 und gegebenenfalls sogar die Leuchtdioden 31 gelöscht werden, werden vornehmlich die Zähler 27 auf übliche Art und Weise über einen AC-DC-Wandler 33, der beispielsweise Netzspannung auf die für integrierte Schaltkreise übliche Gleichspannung von z.B. 8–12 V wandelt, gespiesen, wobei dies über eine Pufferbatterie resp. einen Akkumulator 35 erfolgt. Damit ist sichergestellt, dass bei Stromausfall zählerseitig die bis dahin angefallenen, der verstrichenen überwachten Zeit entsprechenden Zählerstände gesetzt bleiben. Für die Rücksetzung der Zähler 27, beispielsweise bei einer Revision, sind deren Rücksetzeingänge mittels Rücksetzschaltern $R_Z$ aktivierbar.

Um mit möglichst geringem Aufwand die Rücksetzung der einzelnen Anzeigen 11 resp. 29 vornehmen zu können, ist vorgegeben, die Rücksetzeingänge der Flip-Flop 29 auf einen ersten Metallkontakt 37 zu führen (Fig. 3). In dessen unmittelbarem Bereich ist ein zweiter Metallkontakt 39 angeordnet, der nun seinerseits auf Rücksetzpotential, beispielsweise auf Erde, geschaltet ist.

Der Rücksetz-Schalter $R_{FF}$ wird durch die beiden Kontakte 37 und 39 gebildet sowie durch einen metallischen Gegenstand, beispielsweise eine spezielle Pinzette 41. Mit dieser werden zum Rücksetzen die beiden Kontakte 37 und 39 der Flip-Flop 29 von aussen her verbunden.

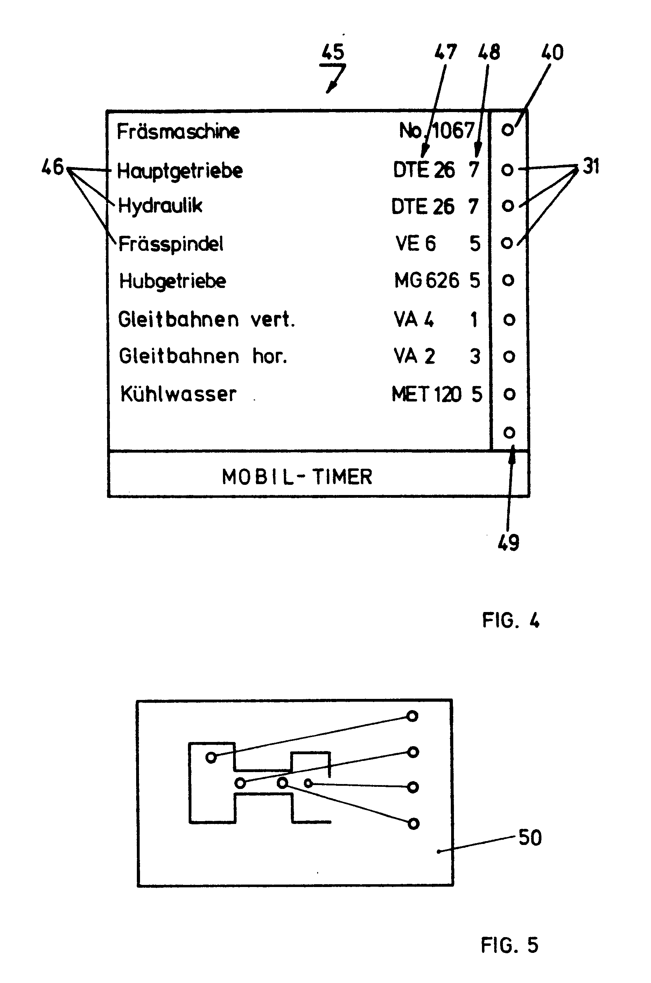

Fig. 4 zeigt die Möglichkeit eines Schmierplans 45, welcher textlich die nötigen Angaben liefert. Eine Kolonne 46 führt die Schmierstellen der Maschine 1 an, eine Kolonne 47 die zu verwendenden Schmierstoffe für die einzelnen Schmierstellen, eine Kolonne 48 die Anzahl der Grundzeiteinheiten, beispielsweise eine Woche, nach welchen zu schmieren ist. Eine Kolonne 49 stellt die nach Zeitabläufen zum Aufleuchten vorgesehenen LED-Dioden 31 dar. Entsprechend der Anzahl Schmierstellen ist eine entsprechende Anzahl von Leuchtdioden 31 angeordnet. Eine, z.B. grüne, Leuchtdiode 40, oben am Überwachungstableau, ist die Frequenzkontrolle für den Impulsgenerator 25.

Es ist auch möglich, anstelle eines textlichen Schmierplanes 45 einen bildlichen Schmierplan 50 vorzusehen, wie in Fig. 5 in verkleinertem Massstab offenbart. Darin ist die Kontur einer Maschine mit vier Schmierstellen, welche auf die zugehörigen LED 31 weisen, dargestellt.

Entsprechend dem vorgesehenen Schmierplan 45 bzw. 50 der Werkzeugmaschine 1, wie dieser beispielsweise in den Fig. 4 und 5 dargestellt ist, erfolgt die Programmierung mit Hilfe der z.B. als Prints ausgebildeten Überbrückungsstücke 28a, welche die Maschinenlaufzeiten festlegen, nach denen die einzelnen Schmierstellen gemäss dem Schmierplan zur Schmierung fällig werden. Gemäss dem Schmierplan leuchtet mithin als erste Stelle die zu schmieren ist, auf der fünften Linie die Leuchtdiode zu «Gleitbahnen vertikal» auf, die z.B. allwöchentlich bzw. nach einer Laufzeit der Maschine von 40 Std. zu schmieren sind. Entsprechend leuchtet die Leuchtdiode zum Schmieren der horizontalen Gleitbahnen nach 3 × 40, d.h. 120 Std., auf.

Die längste Laufzeit ohne Schmierung weisen das Hauptgetriebe und die Hydraulik auf, nämlich 7 × 40 Std., wobei die beiden zugehörigen Leuchtdioden 31 parallel geschaltet sind, also gleichzeitig aufleuchten.

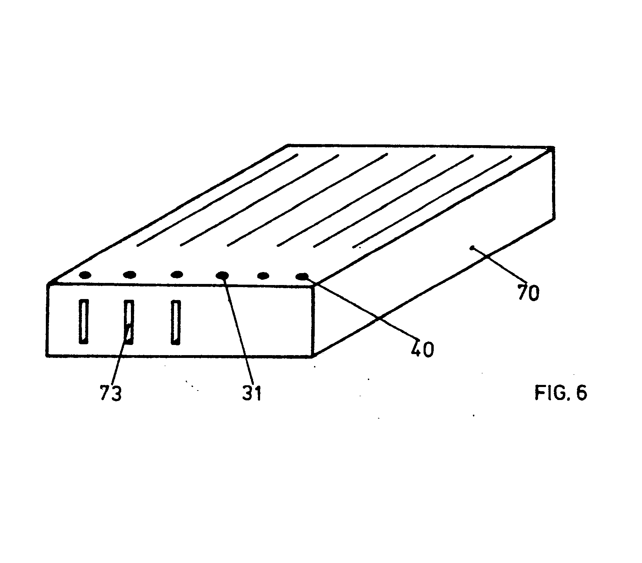

Die Schaltung vom Impulsgenerator 25 bis zu den LED-Dioden 31 befindet sich gesamthaft in einem geschlossenen Gehäuse 70 (Fig. 6). Auf dessen Oberseite kann der entsprechende Schmierplan, z.B. gemäss Fig. 4, eingeschoben werden, wobei am Ende jeder Zeile die zugehörige LED-Diode 31 folgt. In Fig. 6 sind nur fünf Schmierstellen vorgesehen. Zum Rücksetzen der Flip-Flop 29 weist das Gehäuse 70 seitlich entsprechende Schlitze oder Öffnungen 73 auf, durch welche der mit der Schmierung Beauftragte sein Rückstellinstrument, z.B. eine Pinzette 41, einführen und den entsprechenden Flip-Flop 29 in seine Nullage zurückbringen und die zugehörige LED-Diode 31 löschen kann.

Als Impulsgenerator und erster Frequenzteiler kann ein CMOS 4 521, als zweiter Teiler zum Abgreifen ein CMOS 40 24 und als Inverter zum Sichern der richtigen Flankenlage ein CMOS 40 49 verwendet werden. Diese Teile werden z.B. von der National, Motorola oder RCA hergestellt. Als Flip-Flop können die FF 40 43 von RCA Verwendung finden.

Das Speisenetz für den Signalgeber weist eine Spannung von z.B. 8 bis 12 Volt Gleichstrom auf. Es versorgt die Anlage vom Zähler 27 weg ununterbrochen und unabhängig vom Einschaltzustand der Maschine 1. Um bei Stromausfall und Ausfall der Maschine 1, bei welchem Zustand auch diese Speisespannung ausfallen würde, sicherzustellen und damit zu erreichen, dass die bis zum Stromausfall gespeicherten Werte der Laufzeit der Maschine 1 nicht gelöscht werden, ist zur Versorgung der Akkumulator 35 eingebaut. Der Impulsgenerator 25 ist mit dem Schaltzustand des Hauptschalters 10 der Maschine 1 gekoppelt. Nur wenn die Maschine 1 läuft, läuft auch der Impulsgenerator 25. Dieser Zustand ist am Aufleuchten einer, z.B. grünen, Frequenzkontrollampe 40, welche ebenfalls eine Leuchtdiode (LED) ist, ersichtlich. Sie zeigt die Grundfrequenz des Impulsgenerators 25 durch periodisches Schwanken ihrer Leuchtkraft an.

Bei einer Impulslänge von beispielsweise 1,125 Sek. am Impulsgenerator 25 (Frequenz $f_1$) können auf diese Weise an den Ausgängen des Zählers 27 Frequenzen von Stunden erzeugt werden, nämlich entsprechend der Teilung der Frequenz $f_1$ im Verhältnis $1,125^n$ Sek.

Für den vorliegenden Fall einer Maschinenschmierung, welche zehn Schmierstellen, oder, wie im vorliegenden Fall, acht Schmierstellen aufweist, sind die letzten zehn bzw. die letzten acht Stufen der Frequenzteiler bzw. Zähler 27 angezapft.

Die programmierbaren Zeiten, die den letzten acht Stufen des Frequenzteilers entsprechen, sind wie folgt vorgesehen: 40, 80, 160, 320, 640, 1280, 2560 und 5120 Stunden bei einer Impulsgenerator-Schwingungszeit von 1,125 Sek. Der vorgesehene Einstellbereich liegt zwischen 50%–200%.

Durch Auswechseln der entsprechenden Überbrückungsstücke 28a (Prints) kann ein anderer Schmierplan programmiert werden.

In diesem Sinne zeigt das Aufleuchten jeder LED-Diode 31 an, dass die Maschine 1 eine vorbestimmte Zeit gelaufen ist und die entsprechende Schmierstelle, deren LED-Diode aufleuchtet, geschmiert werden muss.

**Patentansprüche**

1. Wartungs-Überwachungseinrichtung für eine Anlage, an welcher nach Ablauf von Wartungs-Zeitabschnitten Wartungsarbeiten durchzuführen sind, mit einem während wartungsrelevanter Anlagebetriebszeit aktivierten Signalgeber, dem eine Integrationsanordnung nachgeschaltet ist sowie mit einer der Integrationsanordnung nachgeschalteten Anzeigeanordnung, die anzeigt, wenn die an der Integrationsanordnung aufgelaufene Betriebszeit einem vorgegebenen Wartungs-Zeitabschnitt entspricht, dadurch gekennzeichnet, dass der Signalgeber ein Zeittaktgenerator (25) ist, und die Integrationsanordnung eine Zähleranordnung (27) umfasst, die die Takte zählt, wobei mehrere zyklisch aufinkrementierende Zählerstufen (28) vorgesehen sind, dass an vorgegebenen Zählerstufen durch letztere setzbare durch manuell betätigbare Quittierschalter rücksetzbare Speicherelemente (29) vorgesehen sind, denen je ein Anzeigeorgan (31) der Anzeigeanordnung nachgeschaltet ist.

2. Wartungs-Überwachungseinrichtung nach Anspruch 1, dadurch gekennzeichnet, dass die anzeige-wirksamen Zählerstufen durch auswechselbare oder umstellbare Verbindungsmittel (28a) zu den Speicherelementen vorwählbar sind.

3. Wartungs-Überwachungseinrichtung nach Anspruch 1 oder 2, dadurch gekennzeichnet, dass die manuell betätigbaren Quittierschalter zwei galvanisch getrennte Kontakte umfassen (37, 39) zwischen die ein leitender Gegenstand (41) als Kontaktbrücke einführbar ist.

4. Wartungs-Überwachungseinrichtung nach einem der Ansprüche 1–3, dadurch gekennzeichnet, dass ein bildlicher und/oder textlicher Schmierplan vorgesehen ist und die Anzeigeorgane (31) sicht- oder lösbare Signalgeber an zugeordneten Stellen des Plans umfassen, derart, dass die Einhaltung der Wartungs-Zeitabschnitte übersichtlich kontrollierbar ist.

5. Wartungs-Überwachungseinrichtung nach Anspruch 2, dadurch gekennzeichnet, dass die Verbindungsmittel als Kontaktlaschen (28a), als Kreuzschienenverteiler, als Steckelement mit Gesamtprogramm, z.B. als Printplatte, ausgebildet sind.

6. Wartungs-Überwachungseinrichtung nach Anspruch 1, welcher als Warnvorrichtung zur Überwachung von periodisch zu bedienenden, insbesondere zu schmierenden Stellen einer Werkzeugmaschine ausgebildet ist und ein Gehäuse (70) zur Aufnahme ihrer elektronischen Elemente aufweist, auf dessen Oberseite ein Bedienungsplan (45, 50), insbesondere ein Schmierplan, befestigbar, z.B. in Schienen einschiebbar ist, dadurch gekennzeichnet, dass jeder textlich oder bildlich bezeichneten Schmierstelle ein von aussen, z.B. von der Arbeitsstelle aus, sichtbarer oder hörbarer Signalgeber (31) der Anzeigeanordnung zugeordnet ist.

7. Wartungs-Überwachungseinrichtung nach Anspruch 1, dadurch gekennzeichnet, dass ein weiteres Organ (40) den Einschaltzustand des Zeittaktgenerators (25) anzeigt.

**Claims**

1. Maintenance monitoring device for a system on which maintenance work has to be carried out after maintenance intervals have elapsed, comprising a signal transmitter, which is activated during the maintenance-related system operating time and which is followed by an integration arrangement, and comprising an indicating arrangement which follows the integration arrangement and which indicates when the operating time accumulated at the integration arrangement corresponds to a predetermined maintenance interval, characterised in that the signal transmitter is a timing generator (25) and the integration arrangement comprises a counter arrangement (27) which counts the clock periods, several counter stages (28) being provided which have an incrementing function, that storage elements (29) are provided at predetermined counter stages, which can be set by the latter and can be reset by acknowledgement switches which can be manually operated, which storage elements are in each case followed by an indicating member (31) of the indicating arrangement.

2. Maintenance monitoring device according to Claim 1, characterised in that the counter stages which are effective for indication can be pre-selected by exchangeable or re-adjustable means (28a) for connection to the storage elements.

3. Maintenance monitoring device according to Claim 1 or 2, characterised in that the acknowledgement switches, which can be manually operated, comprise two electrically isolated contacts (37, 39) between which a conductive object (41) can be inserted as a contact link.

4. Maintenance monitoring device according to 1 of Claims 1–3, characterised in that a pictorial and/or textual lubricating plan is provided and the display members (31) comprise visible or audible signal transmitters at associated points on the diagram, in such a manner that the adherence to the maintenance time intervals can be clearly checked.

5. Maintenance monitoring device according to Claim 2, characterised in that the connecting means are constructed as contact straps (28a), as crossbar distributor, as plug element with a total program, for example, as printed circuit board.

6. Maintenance monitoring device according to Claim 1, which is constructed as a warning device for monitoring points on a machine tool which must be periodically operated and, particularly, lubricated, and comprises a housing (70) for accommodating its electronic elements, on the top of which an operating diagram (45, 50), particularly a lubricating diagram, can be attached, for example, inserted into rails, characterised in that each textually or pictorially designated lubricating point is associated with a signal transmitter (31) of the indicating arrangement, which signal transmitter is visible or audible from the outside, for example, from the working place.

7. Maintenance monitoring device according to Claim 1, characterised in that another member (40) indicates that the timing generator (25) is switched on.

**Revendications**

1. Dispositif de contrôle de maintenance pour une installation sur laquelle doivent être effectuées des opérations d'entretien à l'issue de périodes de surveillance, comportant un générateur de signaux qui est activé pendant une période de fonctionnement de l'installation qui fait part de la période de surveillance et en aval duquel est branché un montage intégrateur, et comportant encore un montage de signalisation branché en aval du montage intégrateur et indiquant l'instant auquel la période de fonctionnement écoulée sur le montage intégrateur correspond à une période de surveillance prédéterminée, caractérisé par le fait que le générateur de signaux est un générateur d'impulsions d'horloge (25), et le montage intégrateur comprend un dispositif de comptage (27) qui compte les impulsions et dans lequel sont prévus plusieurs étages de comptage (28) à incrémentation cyclique, et que, sur des étages de comptage prédéterminés, sont prévus des éléments de mémoire (29) qui peuvent être mis en service par ces derniers et remis à zéro par des interrupteurs d'accusé de réception actionnables manuellement, et en aval de chacun desquels est branché un organe de signalisation (31) respectif du montage de signalisation.

2. Dispositif de contrôle de maintenance selon la revendication 1, caractérisé par le fait que les étages de comptage déclenchant la signalisation peuvent être connectés sélectivement aux éléments de mémoire par des moyens de connexion (28a) remplaçables ou permutables.

3. Dispositif de contrôle de maintenance selon la revendication 1 ou 2, caractérisé par le fait que les interrupteurs d'accusé de réception actionnables manuellement comprennent deux contacts (37, 39) isolés galvaniquement, entre lesquels un objet (41) conducteur de l'électricité peut être inséré en tant que pont de contact.

4. Dispositif de contrôle de maintenance selon l'une des revendications 1 à 3, caractérisé par le fait qu'il est prévu un plan de lubrification dessiné et/ou écrit et les organes de signalisation (31) comprennent, en des points associés du plan, des émetteurs de signaux visibles ou audibles de façon que le respect des périodes de surveillance puisse être clairement contrôlé.

5. Dispositif de contrôle de maintenance selon la revendication 2, caractérisé par le fait que les moyens de connexion sont réalisés sous la forme de languettes de contact (28a), de répartiteur à barres croisées, d'éléments à fiches avec programme d'ensemble par exemple sous la forme de carte imprimée.

6. Dispositif de contrôle de maintenance selon la revendication 1, qui est réalisé sous la forme d'un dispositif avertisseur pour le contrôle de zones d'une machine-outil à desservir, en particulier à lubrifier, périodiquement, et qui présente un boîtier (70) pour le logement de ses composants électroniques, sur la face supérieure duquel peut être fixé, par exemple par insertion dans des glissières, un plan de service (45, 50), en particulier un plan de lubrification, caractérisé par le fait qu'à chaque zone de lubrification désignée par un texte ou un dessin est associé un émetteur de signaux (31) du montage de signalisation qui est visible ou audible de l'extérieur, par exemple depuis le poste de travail.

7. Dispositif de contrôle de maintenance selon la revendication 1, caractérisé par le fait qu'un organe supplémentaire (40) indique l'état de mise en service du générateur d'impulsions d'horloge (25).

0 026 869

FIG.1

FIG.2

FIG.3

7

45
47 48 40

| Fräsmaschine | No. 1067 | o |
| Hauptgetriebe | DTE 26 7 | o |
| Hydraulik | DTE 26 7 | o |
| Frässpindel | VE 6 5 | o |
| Hubgetriebe | MG 626 5 | o |
| Gleitbahnen vert. | VA 4 1 | o |
| Gleitbahnen hor. | VA 2 3 | o |
| Kühlwasser | MET 120 5 | o |
| | | o |

46

31

49

MOBIL - TIMER

FIG. 4

50

FIG. 5

FIG. 6